Europäisches Patentamt

European Patent Office

Office européen des brevets

(11) Publication number: **0 670 566 A2**

# EUROPEAN PATENT APPLICATION

(21) Application number: **95101090.9**

(22) Date of filing: **26.01.95**

(51) Int. Cl.6: **G08G 5/02**

(30) Priority: **04.02.94 US 191871**

(43) Date of publication of application:
**06.09.95 Bulletin 95/36**

(84) Designated Contracting States:
**DE ES FR GB IT SE**

(71) Applicant: **AVCO CORPORATION**
**40 Westminster Street**
**Providence,**
**Rhode Island 02903 (US)**

(72) Inventor: **Viviani, Gary L.**
**10 Pyebrook Lane**
**Boxford,**
**Massachusetts 01921 (US)**
Inventor: **Klingenschmitt, Carl E.**
**11520 Howe Road**
**Akron,**
**New York 14001 (US)**

(74) Representative: **Patentanwälte Grünecker,**
**Kinkeldey, Stockmair & Partner**
**Maximilianstrasse 58**
**D-80538 München (DE)**

(54) **Hybrid synthetic aircraft landing system.**

(57) An avionics device, associated with an aircraft landing system, capable of being operated in conjunction with externally transmitted signals including a portion for receiving the externally transmitted signals. There is an additional portion which determines state vector information based solely upon the externally transmitted signals.

FIG. 1

Field of the Invention

The present invention relates to an aircraft landing system, and more particularly to one that utilizes signals generated by present landing systems to provide an accurate visual indication of what the state vector of the aircraft is with respect to the aircraft landing location. The aircraft landing system may be used as an automatic landing system and/or to provide a detailed indication to the pilot about where the aircraft landing location is with respect to the aircraft. The term "state vector" includes such parameters as position (along 3 axes), velocity, pitch, yaw and bank.

Background of the Invention

Aircraft navigation has evolved, as has the navigational equipment associated with landing and taking off in aircraft. Recent landing systems have developed to such a degree that many sophisticated aircraft can land and take off by themselves. Pilots for certain commercial air carriers, for instance, are instructed to maintain the aircraft in "automatic" mode (under complete control of the navigational equipment, inertial equipment, landing system, etc.), from takeoff through landing. Even though so called automatic landing capabilities exist, implementing such systems in an aircraft is expensive and there is typically no accurate display of the runway associated with these landing systems.

One essential function of the pilot which remains, even with complex automatic landing systems, is to monitor the aircraft in the situation that an emergency arises or becomes imminent (hopefully to avert such an emergency). The pilots can monitor the flight and/or navigational instruments to ensure that an aircraft which is in automatic mode does not veer too far from the intended course (indicating a problem with the automatic mode equipment). However, if the pilot is to obtain more information to accurately determine the emergency status during such "automatic" flights, it is important that the pilot have as much of the state vector information related to the navigation of the aircraft as possible in an easy to observe and interpret format. It is important to provide this information not only to assist in the stated monitoring, but because pilots are reticent to risk their lives (and the lives of their passengers) if there is no reliable Positional indication of the aircraft. One of the essential elements of information which would be required by the pilot is the state vector which accurately describe the relation between the aircraft and the aircraft landing location (which is typically a runway, but could also be a heliport, seaport, etc.).

Landing an aircraft, under modern instrument conditions, normally depends upon a remotely based transmitter (either located on the ground or in a satellite), a receiver in the aircraft, and the ability for the pilot to process the information represented by a display associate with the receiver in a safe, efficient and accurate manner. So called non-precision approaches interact with landing systems to provide azimuth information to the pilot. Examples of non-precision approaches include very high frequency omni-directional range (VOR), non-directional beacon (NDB) and localizer (LOC) which are all well known in the art. In non-precision approaches, the pilot has to determine glide slope information from other sources (i.e. the altimeter).

A more sophisticated type of approach, in which both azimuth and glide slope information is provided to landing systems, is called a precision approach. Most large airports have an instrument landing system (ILS) which is a specific type of precision approach. The ILS is the approach which is most relied upon by present commercial aviation today. Another aide in navigation is the distance measuring equipment (DME) which provides information to the pilot about how far the aircraft is away from a particular navigational aide (range information). Combining the azimuth and glide slope information with the DME information enables the pilot to very precisely locate the aircraft within the three dimensions. However, the combined ILS and the DME instrumentation is not as precise as would be desired to provide an automatic landing system capability without augmentation (i.e. an inertial landing system located aboard the aircraft, which tends to be quite expensive, bulky, and complex).

One disadvantage of many of the above existing precision and non-precision approaches is that information relating to where the aircraft landing location is with respect to the aircraft is provided only when the aircraft is within a limited specified elevation angle of one desired approach (usually three to five degrees maximum). The existing approaches are typically straight-in-approaches. Providing a system where the position of the runway with respect to the aircraft would be indicated even where the aircraft is off of the desired approach is desirable. In this manner, more complex approaches could be performed with the pilot always aware of the position of the runway (such as course reversals, curved approaches, etc).

Microwave landing systems (MLS) are a relatively newly developed type of precision landing system which has been implemented at a few airports. The MLS is similar to the ILS in providing azimuth and glide-slope information from a land based transmitter, and it also provides range information. Each MLS transmitter is typically capable of generating signals usable for several different approaches along different azimuths, etc. which would be especially useful at busy airports. An MLS can be used for either straight-in, dog leg, or whatever type of approaches are necessary or desired. The MLS uses three antennas: azimuth, glide slope, and range. One of the two receivers in the aircraft (one is an MLS signal in space antenna, and another antenna is DME) are capable of receiving signals from each of the three transmitting antennas (which provide information about aircraft capable of positively locating the aircraft in the three dimensions). The potential applications of the MLS has not been realized, however, since the developers of the instrumentation associated with the MLS have mimicked the instrumentation utilized for the ILS even though the MLS has a far greater adaptability potential for distinct types of approaches than the ILS.

MLS conforms to international standards (all of the above precision and non-precision approaches conform to international standards), and produce signals in space which permit an aircraft receiver to determine space vector information of the aircraft relative to the antennas on the ground; and a DME transponder determines the range information. Additionally, the angle receiver decodes so called data-words which provide airport specific information in order to accurately determine the Cartesian space coordinates of the aircraft, by strictly geometric means. Therefore, the MLS can also provide much more accurate information then the other typed of landing systems for either precision or non-precision approaches.

Another landing system, which has won wide recognition within the past decade, is the global positioning system (GPS) which can provide extremely accurate state vector information (in a latitude and longitudinal format) utilizing transmitters based on satellites. By using differential GPS (DGPS) in a standard configuration, accurate range estimates can be made in lieu of, or in addition to, the DME. DGPS provides three dimensional location information about the aircraft not only near the landing locations, but also in the enroute portions of the flight as well. Therefore, both GPS and MLS are capable of providing extremely accurate state vector information utilizing transmitted signals.

In aircraft carrier landing systems (ACLS), azimuth, elevation and range information are provided. This information is obtained by different technology which does not generally correspond to the above international standards. Often, radar is used to determine range, elevation and azimuth which in turn are processed shipboard with the results transmitted to the aircraft. Effectively, the net information obtained is identical whether the processing equipment is airborne or ground based (shipboard), except that for ACLS, shipboard sensors and processors would be able to provide information relating to the motion of the ship more accurately. DGPS could be utilized in lieu of, or in addition to, the radar range. The ACLS similarly can provide location information to the planes along a three dimensional coordinate system.

In present day landing and take-off control systems, the combined effect of utilizing the information provided by the signals in space is to convert azimuth, elevation and range information into a 3-dimensional location of the aircraft (x,y,z) in the Cartesian space which surrounds the landing zone (space vector information). Alternatively, the Cartesian coordinates could be easily converted to a spherical coordinate system which contains equivalent positional information. Such space vector information is important not only in monitoring the position of the aircraft on a display within the aircraft, but also in providing an automatic landing system. In other words, the specific coordinate system which is used to perform the calculations to determine the state vector information is irrelevant, as long as a high order differential equation (typically sixth order or higher) can be accurately obtained to precisely determine the state vectors.

In a system which uses unrelated technology to the above described landing systems, the so called synthetic landing systems have been implemented and considered. Active sensors (i.e. infrared or millimeter wave radar waves) have been built into the aircraft in order to provide a synthetic image (dependant on the wave length of the active elements of the sensors) of the field of view (FOV) in front of the pilot. The sensors can be used to scan, or stare, from the nose of the aircraft in such a manner to produce an image similar to the FOV of the pilot looking in the direction of flight from inside the cockpit. These systems are referred to as "synthetic vision" since alternate sensors (which have sensitivities that may be complementary to human vision) are used to provide the image of the FOV.

Presently, synthetic vision images are of poor quality and, due to the lack of ability of these sensors to operate in real time, cannot be relied upon extensively and do not provide an adequately reliable system for an automatic landing system. The production of synthetic images is also extremely expensive and difficult to manufacture. Finally, considering the amount of review and testing which the FAA, and other administrative agencies apply to each landing system prior to its certifying and standardizing, it appears that it will be a long time before synthetic landing systems are accepted into routine commercial, military, or general aviation use.

Typically, the synthetic vision image is displayed in the heads up display (HUD) or the heads down display (HDD) in order to provide the pilot with alternate means for locating the runway, especially under adverse weather conditions. Since pilots prefer maintaining their view of the instruments at a location where the external environment (runway, other planes, terrain, etc.) can be viewed, HUDs are preferred over HDDs in synthetic landing systems, for virtually all types of landing systems. However, since equivalent information can be displayed over either a HUD or HDD, the two displays will be considered interchangeable in this disclosure.

It becomes evident from the above description that there would be advantages in providing some aircraft landing systems which combines the benefits of the above system while limiting the inherent disadvantages. Such a system would use largely existent (and proven) equipment. It would also be desirable to permit multiple separate approaches of the dog leg or straight-in type approaches (and course reversals if necessary) while continually providing the pilot and/or air traffic control with accurate, real time, three dimensional, accurate information about the position of the runway (in a new type of HUD). It would also be beneficial to provide accurate state vector information about the aircraft with respect to the aircraft landing location (that could be reliably used in automatic landing systems). It would also be highly desirable to provide an accurate and real time display of the present location of the aircraft landing location with respect to the aircraft which would be simple enough for the pilot to access and comprehend quickly.

## SUMMARY OF THE INVENTION

The present invention relates to an avionics device capable of being operated in conjunction with externally transmitted signals including a portion for receiving the externally transmitted signals. State vector information is determined based solely upon the externally transmitted signals.

## BRIEF DESCRIPTION OF THE DRAWING FIGURES

Fig. 1 illustrates a schematic illustration of one embodiment of the present invention;
Fig. 2 illustrates an exploded schematic of one embodiment of the processor portion 38 of Fig. 1;
Fig. 3 illustrates a symbolized view of a prior art heads up display (HUD); and
Fig. 4 illustrates a symbolized view of one embodiment of present invention head up display (HUD), with a runway outline 64 included.

## DETAILED DESCRIPTION OF THE PRESENT INVENTION

Accurate real time state vector information of an aircraft could be utilized in an automatic landing system, and could also be used by a display which could be used by the pilot during the takeoff, landing, taxiing, and even the enroute portions of the flight. In this application, the term "state vector" is meant to include such parameters as position in three dimensions, velocity, pitch, yaw, and bank. Modern computers used in automatic aircraft landing systems require continual updates of at least a six dimensional state vector which produces a sixth order differential equation.

In this disclosure, the term "landing system" is defined as those systems which provide information to the systems in the aircraft, or to the pilot, pertaining to the position of the aircraft with respect to the aircraft landing location. The term "automatic landing system" is defined as those systems which are capable of landing an aircraft at an aircraft landing location with or without the assistance of the pilot. The term "aircraft landing location" is intended to cover runways used for takeoff as well as those used for landings since the present system can be utilized for both activities; as well as heliports, seaports, etc. The term "signal" is defined as those signals transmitted by remote transmitters which are received by aircraft based receivers. Information is the useful data transmitted by the signals, being processed by the processors, or contained within storage which is to be utilized by some system aboard the aircraft or by the pilot.

The present invention uses external signals emanating from conventional landing systems (MLS, GPS, etc.) to provide accurate state vector information. Even though other relatively accurate automatic landing systems are presently available which rely upon internal navigation units (INU), radar altimeters, and ILS to obtain state vector information aboard the aircraft. Such systems tend to be expensive, bulky, and heavy. The above drawbacks of these systems tend to limit their usage to only the larger commercial or specialized military aircraft. In addition, upgrading said systems aboard aircraft tends to be a difficult process since each system operates differently. Moreover, the accuracy of the present invention will be higher, the costs will be lower, the implementation will be easier, and the final packet will be less bulky.

State Vector Information

The more precise that the state vector information is, the more accurate and reliable the automatic landing system (or the display to the pilot) can be. The following variables are elements of the state vector, and are intended to be illustrative and not limiting in scope (as are the other equations in this application).

$V1$ = average distance above the earth of the aircraft (the z dimension in Cartesian coordinates).

$V2$ = x position in the Cartesian coordinate system.

$V3$ = y position in the Cartesian coordinate system.

$V4$ = velocity of aircraft in the direction of flight.

$V5$ = angle of inclination of the flight path (when $V5 = 0$, the flight path is horizontal, when $V5 > 0$, the aircraft is ascending, when $V5 < 0$, the aircraft is descending).

$V6$ = planar bearing in the x-y plane. When $V6 = 0$, the point is on the positive x axis, when $V6 = Pi/2$, the point is on the positive y axis.

$V7$ = This variable relates to the bank of the aircraft. It may or may not be used, since it is a very difficult variable to accurately determine with conventional aircraft instrumentation. Only 6 variables are required to provide very accurate positioning, and $V1$ to $V6$ are typically used.

If the above state vector is precisely known, the relative position of a point on the aircraft landing location with respect to the aircraft can be determined. One simplifying assumption of the state vector relating to an aircraft landing location (excluding an aircraft carrier) is that it is fixed with respect to the earth This assumption forms the basis for most of the applicable aviation coordinate systems. Other information which must be provided to the processor in order for a HUD to properly display the aircraft landing location include:

a) the runway length,

b) the runway width,

c) antenna locations (the x,y, and z coordinates for each antenna) compared to the ends of the runway (taken along the x,y, and z axis.

With the above information, the position of the aircraft landing location (and a rough outline thereof) can be used in an automatic landing system or imaged on a HUD or HDD using the techniques illustrated below.

Hardware Of The Present Invention

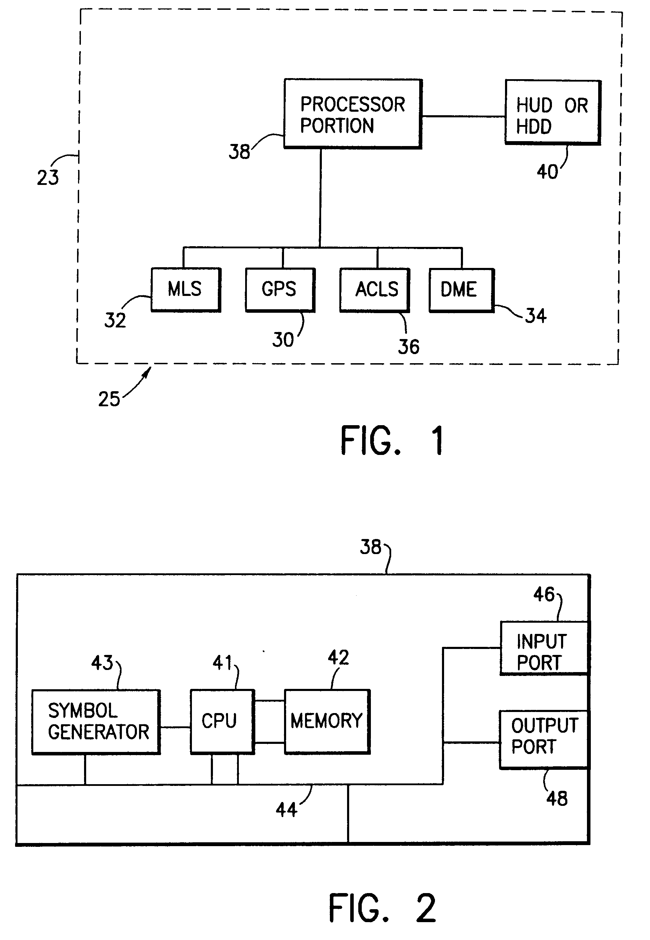

Fig. 1 illustrates a schematic diagram of one embodiment of the hardware 23 associated with the present invention. An aircraft 25 carries all of the hardware 23. Inputs are utilized from one or more of a global positioning system (GPS) avionics portion 30, a microwave landing system (MLS) avionics portion 32, a distance measuring equipment (DME) avionics portion 34, and an aircraft carrier landing system (ACLS) avionics portion 36. Each of the above avionics portions 30, 32, 34 and 36 feed information to and from a processor portion 38, which translates all of the information it receives into data which is of the form which can be displayed on a heads up display (HUD) or heads down display (HDD) 40, or alternatively, controls the aircraft using a system as is well known in the art. The processor portion 38 does not need information from all of the avionics portions 30, 32, 34, 36, but only needs enough information for state vector updates.

A major element of the present invention is the processor portion 38, which may be considered a "black box" which takes information from the various avionics portions 30, 32, 34, 36, and converts the information into a set of symbols which may be applied to HUD or HDD 40 as described below. The term "signal" as used in this application is defined as signals transmitted externally to the aircraft 25, and received by the applicable one of said avionics portion 30, 32, 34, 36.

Fig. 2 illustrates an exploded view of the processor portion 38 of Fig. 1. The essential elements of the processor portion are a CPU 41, a symbol generator 43, a memory 42, a bus 44, an input port 46 and an output port 48. The bus 44 is typically a 1553B (military standard), or ARINC standard 429 bus. The CPU can interface with the bus 44. The memory 42 is a combination of RAM and ROM type memory depending upon the specific application. The input port 46 and the output port 48 receive signals from and send signals to, respectively, other devices in the aircraft (such as flaps, engine power, etc. - not illustrated but well known). The CPU 40 provides an interaction between the information received by the avionics portions thereby permitting an interaction between the aircraft portions and the avionics portions 30, 32, 34, 36 controlling the aircraft and providing automatic landing capabilities.

5

Display Devices

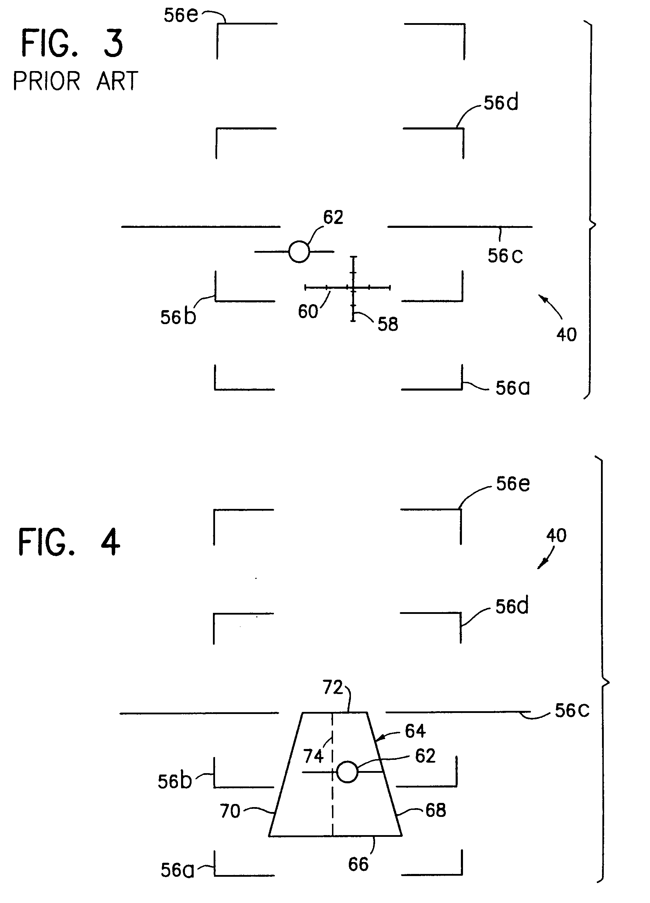

An important feature of the processor portion 38 is translating external signals received from the avionics portions 30, 32, 34, 36 into a three dimensional image on the HUD or the HDD 40, as illustrated in Fig. 3. Fig. 3 includes a plurality of attitude indicators 56a, 56b, 56c, 56d and 56e including horizontal attitude indicator 56c. There is a glide slope location indicator 58, and an azimuth location indicator 60, which together provides an indication of the aircraft's position relative to an ILS, a MLS or other landing system. There is an aircraft indicator 62 which displays information as to where the aircraft is with respect to its desired heading, and the horizontal attitude.

Previously, to develop accurate displays of the runway from the perspective of the pilot, internal guidance or INUs (as are available with sophisticated gyroscopes, automatic pilots, etc.) have been used to create a suitable image to assist the pilot. These systems, however, are expensive to implement, and the accuracy is dependent on the transducers (which typically are not as accurate as signal receivers). The method of the present invention is much simpler, and also provides a more accurate indication of the location of the runway.

Considering that the standard HUD or HDD (the present invention could be applied to either, so in this specification the terms are being used interchangeably) is basically a graphics control panel with specific operations that depend upon the design of the specific panel; an image can be created on the HUD which represents a position of the aircraft with respect to an aircraft landing location (typically a runway). Fig. 4 illustrates a HUD display 40 with a runway symbol 64 in front of the aircraft, and the aircraft is in a slightly nose low position as indicated by the aircraft indicator 62. The runway symbol 64 includes a threshold symbol 66, two runway side symbols 68, 70, a runway end symbol 72, and a runway centerline symbol 74. The size, shape, and outline of the runway 64 will be determined by data on the runway stored in memory 42, and generated by the symbol generator 43. Similar aircraft landing location symbols can be generated for heliports, seaports, taxiways, etc.

Notice that the image of the aircraft landing location (runway) which appears on the HUD or HDD has straight edges, thresholds, centerlines, etc. since runways themselves typically have straight edges, this modelling technique is appropriate. The memory 42 illustrated contains data pertaining to the length, width, angle, and other characteristics of the runway. Based upon this data and the information obtained from the present invention relating to where the aircraft is with respect to the aircraft landing location, and accurate portrayal of the runway, and the centerline, can be created by the symbol generator.

The prior art infra-red sensor technology produces a similar, but more complex and expensive device to that illustrated in Fig. 4 (the prior art device is not illustrated). The runway area in the prior art device is of a different appearance than the surrounding (grass covered) areas since infra-red systems interact with the two areas differently. It can be difficult, however, to distinguish the runway from other roads, taxiways, etc. of the surrounding area. One advantage of the prior art infrared technology compared to the Fig. 4 device is that other aircraft, trucks, etc. can be detected in the prior art device, wherein the Fig. 4 embodiment will not illustrate obstructions on the runway.

However the Fig. 4 image appears much more similar to the other types of graphics which are used, and understood, by pilots in most of the cockpit instrumentation (especially in HUD and HDD displays) than the prior art infra-red image. It can be difficult to detect the runway centerline or edges in the prior art embodiment. Also, there is only one runway which will be illustrated on the Fig. 4 present invention embodiment wherein the prior art infra-red embodiment will illustrate everything which is made of a material which appears to an IR sensor similarly to runways.

In order to concretely illustrate the above concepts relating to the displays of the present invention, the following analogy is made. Initially, assume that the pilot is perched in a stationary chair, properly centered along the approach, approximately 100 feet before the threshold of the runway. With the assistance of an mathematician located remotely from the pilot who knows the pilots position relative to the runway, the specifics of the runway, and a more or less concrete set of equations, the mathematician could draw a close approximation of how the runway appears to the pilot using only straight lines, rectangles, and other simple geometric shapes (without even being located at the vantage point of the pilot). The mathematicians final product could be referred to as a model of the pilots vision.

When the problem is made more complex by providing the actual motion, speed, and acceleration of the aircraft, the job of the mathematician becomes more difficult (and providing a real time model becomes more difficult) even though understanding the modelling process itself is not complicated significantly. Such modelling, commonly referred to as synthetic vision, is presently accomplished from a mobile platform (the aircraft) by using attitude, speed and direction transducers, and attempting to model the appearance of the runway itself. However, the object of the present invention is simplified by using signals which are presently located in space. In the present invention, symbol generators may be used to generate the rapidly changing appearance of the runway by utilizing a progression of simple shapes.

Imaging

Fig. 4 illustrates how a perspective image of the runway surface can be drawn similarly to what the pilot would observe from his field of view (FOV). The FOV can be defined as the pilots cone of vision originating at the pilots eyes. If the pilot had a 360 degree FOV and the aircraft was always level, only the first three elements of the state vector (V1, V2 and V3) would be necessary to determine the proper image of the runway. However, the pilot's view is limited by the fuselage, the cockpit, and the pilot also limits the FOV to that information which is directly ahead for landing and take off operations. Therefore, the actual useful image for the pilot is one that is found by determining the intersection of the cone representing the FOV with the eye of the pilot that is oriented along the V5 element of the state vector (attitude of the aircraft) and the surface of the earth. Hence, the image that is created in the HUD is a function of both the position of the aircraft (in the Cartesian coordinate system) and the attitude of the aircraft. To further refine the image, from the perspective of the pilot, bank angle information can be obtained to further partition the imaginary cone, which represents the FOV of the pilot.

Under normal landing operations, the projection of the cone will likely encompass the aircraft landing location. If it does not, the view that is presented to the pilot in the HUD will not include the runway, which is informative by the conspicuous lack of the aircraft landing location. Under these circumstance the pilot will have to look elsewhere to determine where the aircraft landing location is.

Considering that the update rate of the landing system derived (x, y, z) coordinates occurs at approximately 39 Hz, and considering that the human eye is usually incapable of detecting alterations which occur at a faster rate than 30 Hz, the pilot will be presented with what practically represents a real time display of the aircraft landing location. Given the accuracy of typical landing systems, and the associated signals which are generated therefrom, it is within the realm of current design to provide a HUD which provides a location of the aircraft landing location which is within a meter of the actual aircraft landing location (in all dimensions). Essentially, the pilot will be presented with a synthetic image of the aircraft landing location. Such an image would appear similar to those found in aircraft simulators or video games, which in both cases have been shown to be completely satisfactory for fully controlling an aircraft in take off and landing operations.

However, unlike the situations associated with conventional approaches to synthetic vision and those found in simulators, the three dimensional image of the aircraft landing location must be derived from purely the electronic information provided by the signals transmitted from the antennas associated with the landing system. This is accomplished through the following formulation of aircraft flight equations and laws, which is non-standard and non-linear, and is formulated to have a one on one correspondence with the required elements of the state vector that is suitable for producing a useful image on the HUD. In this manner, the most efficient means can be applied to determine the elements of the state vector by relying on the signals which are generated from the ground portions of the landing systems into space.

With these key observations, a primary thrust of the present invention becomes apparent. Providing an algorithm for precisely determining the position, the air speed and the attitude of an aircraft which is derived fully from the signals generated from the ground portion of the landing system. To achieve this end, a stochastic filter method, which is non-linear in nature, is applied to assure that the signals provide a smooth transition from one sampling period to the next, which is essential for adequate image quality.

Avionics Standards

Every element associated with the present system is present in existing devices which have already been tested and approved. For this reason, the present system should be much simpler to implement as a combined unit then aviation navigational systems which are being derived from scratch.

An external transmitter (which may be ground based for ILS, MLS, etc. or satellite based for GPS, etc.) communicates with an airborne receiver to continually provide updates of the above information which may be used for the following components:

a. angle guidance (using conventional MLS, or uplink information in the case of ACLS) with respect to the runway location;

b. range information using DME or radar with respect to the aircraft landing location; and

c. absolute location with respect to an existing coordinate system using GPS.

The above components are presently available in commercial and military aviation products which provide navigation to the aircraft, but is not displayed to the pilot in an accurate, real time display. Each of these components communicates digitally (or can be made to communicate digitally) with existing, tested; and approved avionics according to one of two standards for such components. For military aircraft, the applicable standards exist as MIL-STD-1553B interface, which is recognized for all modern military aircraft. For commercial aircraft the applicable standard is ARINC 429. With each interface the standards define a digital interface bus and associated codes for all the necessary information, as well as information that may specifically need to be defined, in order that avionics devices can be made to communicate with each other. Therefore, the protocol and hardware interface requirements for military and commercial aviation already exist.

The interface for commercial and military HUDS and HDDs is the above described symbol generator, which also operates over a 1553 interface (military) or an ARINC 429 bus interface for commercial aircraft. Over this digital interface, this device receives commands to create specific images (which have been predefined by the symbol generator) on a HUD or HDD display. There exists a large variety of standard images which may be created by the symbol generator including a straight line, a circle, a rectangle, etc, with specific coordinates in the field of view.

It is one of the goals of the present invention that this information be accurately displayed to the pilot utilizing a suitable real time three dimensional image (HUD or HDD) illustrating the runway from the perspective of the pilot. Present HUD or HDD uses a more or less standard straight line segment draw operations, as is well known in any graphics display program.

Processor Portion Software

By reference primarily to standard texts on aerodynamics, the following equations are utilized by the processor portion 38. These formulas are illustrative in nature and are not intended to be limiting. The use of other, but similar, equations which provide information about the aerodynamics of flight are intended to be within the scope of the present invention:

$$dV1/dt = V4 \sin(V5)$$
$$dV2/dt = V4 \sin(V6) \times \cos(V5)$$
$$dV3/dt = V4 \sin(V6) \times \cos(V5)$$
$$dV4/dt = -g \sin(V5) - N1 (V4)^2$$
$$dV5/dt = N2 \times V4 \cos(V7) - (g/V4)\cos(V5)$$
$$dV6/dt = N2 \times V4 \sin(V7)$$
$$dV7/dt = \text{presently inactive}$$
$$g = \text{acceleration due to gravity} = 9.8 \text{ m/sec}^2$$
$$N1 = 1/2 \; \rho S C_D/m$$
$$S = \text{platform area of wing}$$
$$C_D = \text{draft coefficient (assumed to be constant)}$$
$$\rho = \text{air density}$$
$$m = \text{mass}$$
$$N2 = 1/2 \; pSC_L/m$$
$$C_L = \text{lift coefficient (assumed to be constant)}$$

If we assume that for any observation period of interest, the bank angle is fixed and known, then we can assume that six independent measurements should be sufficient to estimate the state of an unpowered system, which is a suitable approximation of the estimates are continually revised. Such a condition can be created by partitioning the available measurements as follows:

$$S1 = \{p, \theta, \phi\}$$

and

$$S2 = \{r, \theta, \Psi\}$$

where,

S1 = the distance from reference point (measured by DME or radar) antenna, the conical azimuth angle relative to the phase center of the azimuth antenna, or the conical elevation angle relative to the phase center of the elevation radar antenna.

and

S2 = the distance to reference point as measured by DGPS, the conical azimuth angle relative to the phase center of the azimuth (radar) antenna, or the conical elevation angle relative to the phase center of the elevation antenna.

The mapping from the measurement set {S1, S2} to the state vector is nonlinear, but it is continually differentiable and hence may be approximated as linear in the neighborhood that is sufficiently close to the true solution of the system. S1 is associated with measurements made at time epoch 1 and S2 is associated with measurements made at a consecutive epoch, which is a function of the sample rate of the aircraft receiver. If DGPS were not utilized, r and P would be equivalent.

It can be assumed that each individual location in space which receives signals from the landing system of the present invention must each have a characteristic set of signal which are received at that point. The mapping from the measurement space to the state vector must satisfy this set of equations:

$$g1(V1, V2, V3, t1) = (v1-Xd)^2 + (V2-Yd)^2 + (V3-2d)^2 - P^2$$
$$g2(V1, V2, V3, t1) = -\cos^2\theta\,(V2-Ya)^2 + \sin^2\theta\,(V1-Xa)^2 + \sin\theta(V3-Za)^2$$
$$g3(V1, V2, V3, t1) = -\sin^2\phi\,(V_1-Xe)^2 - \sin^2\phi\,(V_2-Ye)^2 + \cos^2\phi\,(V_3-Ze)^2$$

The above equations are applicable for each observation epoch $t_i$. For small perturbations in the solution space, the following standard approximation, for the appropriate Jacobian, J, applies:

$$-\Delta Xp(t) = J^{-1}\,G(t)$$

where

$$\Delta Xp(t) = [V1, V2, V3]^T$$
$$G(t) = [g1, g2, g3]^T.$$

Also,

$$g4(V1, V2, V3, t_1) = (V1-Xa)^2 + (V2-Ya)^2 + (V3-Za)^2 - r^2$$
$$g5(V1, V2, V3, t_1) = -\cos^2\theta(V2-Ya)^2 + \sin^2\theta\,(V1-Xa)^2 + \sin^2\theta\,(V3-Za)^2$$
$$g6(V1, V2, V3, t_1) = -\sin^2\Psi\,(V1-X_f)^2 - \sin^2\Psi\,(V2-Yf)^2 + \cos^2\Psi\,(V3-Z_f)^2$$

Data products that result from a flight of an aircraft will be a continuous stream of MLS, DME, and DGPS measurements which will be partitioned into two sets: S1 and S2, on an alternate basis. By relying on these measurements, which constitutes a stochastic process, it will now be shown how to derive an estimate of the state that is suitable for three dimensional imaging.

The following covariance matrix S1 presents an indication of the statistical variation for the set of MLS observable conditions, S1 = { P, $\theta$, $\phi$ }, for illustration. Assuming independence, the covariance matrix is determined as:

$$COV(S1) = \begin{bmatrix} 5.9400 & 0.0000 & 0.0000 \\ 0.0000 & 0.0205 & 0.0000 \\ 0.0000 & 0.0000 & 0.0176 \end{bmatrix}^2$$

For the case of DGPS measurements, the covariance will be based on the most accurate attainable values of Omega. A suitable value of Omega (the chosen one is based on a survey of the literature and conservative estimates) is chosen, resulting in the following covariance matrix for the observations associated with, and including the DGPS (in the form of slant range) into the measurement set:

$$COV(S1) = \begin{bmatrix} 3.0400 & 0.0000 & 0.0000 \\ 0.0000 & 0.0205 & 0.0000 \\ 0.0000 & 0.0000 & 0.0176 \end{bmatrix}^2$$

Real time conversion of measurement set observations are thereupon created by using a simple arrangement for converting the raw observations of the noise process into estimates of the state vector as follows:

$$\overset{\wedge}{V1} = V1^{\;OLD}$$

$$\overset{\wedge}{V2} = V2^{\;OLD}$$

$$\overset{\wedge}{V3} = V3^{\;OLD}$$

$$dx = V2^{\;new} - \overset{\wedge}{V2}$$

$$dy = V3^{\;new} - \overset{\wedge}{V3}$$

$$dz = V1^{\;new} - \overset{\wedge}{V1}$$

$$\Delta x = \sqrt{dx^2 + dy^2 + dz^2}$$
$$D = \sqrt{dx^2 + dy^2}$$

$$\overset{\wedge}{V4} = \frac{\Delta x}{\Delta t}$$

$$\overset{\wedge}{V5} = \tan^{-1}(dz/D)$$

$$\overset{\wedge}{V6} = \tan^{-1}(dx/dy)$$

where,

1. E[Vn] denotes an estimate of variable Vn. Other conversions are possible but not necessary.

2. The vector x is applied to the estimation algorithm of the next section in order to refine the state estimate.

In this formulation, the raw MLS measurements are alternated between S1 and S2, which is a means for artificially creating the minimal set of 6 measurements in order to estimate the state, assuming that the bank angle is fixed (and known). The bank angle is available from the avionics of conventional aircraft.

A typical covarience matrix of the difference between the true trajectory and the one resulting from the above measurements is as follows:

$$\mathrm{cov}(\overset{\Lambda}{X} - X) =$$

$$\begin{bmatrix} 2.3733 & 0.7555 & -0.7206 & 1.3809 & 0.1028 & 0.1154 \\ 0.7555 & 192.1492 & 14.1269 & 0.6933 & 0.0372 & 10.8290 \\ -0.7206 & 14.1269 & 189.0126 & -0.6434 & -0.0163 & 7.2330 \\ -1.3809 & 0.6933 & -0.6434 & 8.6745 & 0.0339 & -0.3333 \\ 0.1028 & 0.0372 & -0.0163 & 0.0339 & 0.0121 & -0.0162 \\ 0.1154 & 10.8290 & 7.2330 & -0.0333 & -0.0162 & 7.2403 \end{bmatrix}$$

To refine the state estimates, the state estimator using the nonlinear estimator of the next section is applied.

Non-linear estimator

The raw measurement from S1 to S2 are processed to produce a "raw" state estimator which is optimized by passing it through the nonlinear filter of this section. The advantage of using the non-linear filter is that it is typically simpler to process then the prior art linear filter, and the applicable equations are better known and more accepted. Therefore, the non-linear filter will be able to perform more complex computations at a nearer to real time rate then the linear ones.

The following non-linear estimation algorithm is applied to the state estimation problem associated with the stated aircraft problem in order to assure that accurate information is utilized when developing an accurate three dimensional image in the HUD.

For the system:

$$\dot{X}(t) = G\ (X,t) + V(t)$$

with

$$E(V^T V) = Q$$

and the measurement process,

$$Y(t) = H(x) + \xi(t)$$

with

$$E(\xi^T \xi) = R$$

the following iterative and recursive algorithm is presented:

Notations:

$k|\,k-1$ - conditional space of the random variable (conditional expectation based on k-1 observations)
$(i+1)$ - iteration indication
$\Phi$ - State transition matrix
Note that the algorithm revises the estimate of the current time state as well as the most recent state. In this presentation, $H = I$ (the identity matrix).

$$X^{(i+1)}{}_{k|k} = X^{(i)}{}_{k|k-1} + S^{(i)}{}_{k|k}R^{-1}[Y-H(X^{(i)}{}_{k|k})-(X^{(i)}{}_{k|k-1} -X^{(i)}{}_{k|k})]$$
$$X^{(i+1)}{}_{k-1|k} = X^{(i)}{}_{k-1|k-1} + S^{(i)}{}_{k-1|k-1}\Phi^T(X^{(i)}{}_{k-1|k})S^{-1(i)}{}_{k-1|k-1}[(X^{(i+1)}{}_{k|k})] - X^{(i)}{}_{k|k-1})]$$
$$S(i){}_{k|k-1} = \Phi(X^{(i)}{}_{k|k-1})S^{(i)}{}_{k-1|k-1}\Phi^T(X^{(i)}{}_{k|k-1})) + Q$$

$$S^{(i)}_{k|k} = [S^{-1(i)}_{k|k-1} + R^{-1}]^{-1}$$
$$X^{(i)}_{k|k-1} = G(X^{(i)}_{k-1|k} + \Phi(X^{(i)}_{k-1|k})(X_{k-1|k-1} - X^{(i)}_{k-1|k})$$

with boundary conditions given as:

$$X^{(1)}_{k-1|k} = X_{k-1|k-1} \quad X^{(1)}_{k|k} = X_{k|k-1}$$

From this algorithm, a more accurate estimate of the current state, based on the full history of measurements, $X_{k|k}$, is derived.

For comparison purposes the vector of estimates passing through this filter will be defined as:

$$\overline{X} = X^{(i+1)}_{k|k}$$

By taking the norms of the resultant covariance matrix

$$COV(\overline{X} - X)$$

$$. \quad = \begin{bmatrix} 1.6350 & 0.9220 & -0.7621 & -0.0119 & 0.0013 & -0.2310 \\ 0.9220 & 139.2146 & 9.6025 & 0.1855 & 0.0352 & -8.1154 \\ -0.7621 & 9.6025 & 122.3550 & -0.1432 & -0.0129 & 3.36330 \\ -0.0019 & 0.1855 & -0.1432 & 0.0026 & 0.0004 & -0.1053 \\ 0.0013 & 0.0352 & -0.0129 & 0.0004 & 0.0001 & -0.0213 \\ -0.2310 & -8.1154 & 3.6330 & -0.1053 & -0.0213 & 5.1437 \end{bmatrix}$$

and the previous one,

$$COX(\overset{\wedge}{X} - X),$$

it is evident that accuracy is improved on the order of 30%. Therefore, when such a filter is applied to actual data, an accurate estimate of the state vector can be expected.

**Claims**

1. An avionics device capable of being operated in conjunction with externally transmitted signals comprising:
   means for receiving the externally transmitted signals; and
   means for determining state vector information based solely upon said externally transmitted signals.

2. The avionics device as described in claim 1, further comprising:
   display means for displaying state vector information.

3. The avionics device as described in claim 2, wherein said display means is aboard said aircraft.

4. The avionics device as described in claim 2, wherein said display means is a HUD.

5. The avionics device as described in claim 2, wherein said display means is a HDD.

12

**6.** The avionics device as described in claim 1, wherein said state vector determining means is at least partially software.

**7.** The avionics device as described in claim 1, wherein said state vector determining means is at least partially hardware.

**8.** The avionics device as described in claim 1, wherein said state vector determining means uses general laws of flight.

**9.** The avionics device as described in claim 1, wherein said externally transmitted signal is transmitted from a GPS.

**10.** The avionics device as described in claim 1, wherein said externally transmitted signal is transmitted from a MLS.

**11.** The avionics device as described in claim 1, wherein said externally transmitted signal is an ILS.

**12.** The avionics device as described in claim 1, wherein said externally transmitted signal is a DME.

**13.** A method for obtaining state vector information of an aircraft with respect to an aircraft landing location, comprising the steps of:
receiving signals from remote antennas providing an indication of said state vector information;
converting said information based known equations of flight.

**14.** The method as described in claim 13, further comprising the step of:
displaying the relative location of said aircraft landing location from said aircraft.

**15.** The method as described in claim 14, wherein said displaying the relative location is in a form analogous to the field of view (FOV) of the pilot.

**16.** The method as described in claim 14, wherein said displaying the relative location utilizes a HUD.

**17.** The method as described in claim 14, wherein said displaying the relative location utilizes a HDD.

**18.** A method for obtaining information relating to the state vector of a dynamic position with respect to a static remote location, comprising the steps of:
gathering a signal providing information relating to the static remote location;
converting the information to an accurate estimate of the state vector, as defined by the indicated system of equations;

**19.** The method as described in claim 18, further comprising the steps of:
developing appropriate commands for the symbol generation based upon estimates produced by the state estimator.

**20.** The method as described in claim 19, further comprising the step of:
applying a non-linear estimation scheme.

**21.** The method as described in claim 18, further comprising the step of:
displaying results of said appropriate commands.

**22.** The method as described in claim 21, wherein said displaying involves a HUD.

**23.** The method as described in claim 21, wherein said displaying involves an HDD.

**24.** The method as described in claim 18, wherein said signal is transmitted from a GPS.

**25.** The method as described in claim 18, wherein said signal is transmitted from a MLS.

**26.** The method as described in claim 18, wherein said signal is transmitted from a combined ILS/DME.

**27.** An instrument capable of graphically displaying a position of an aircraft landing location on an HUD or HDD as would appear within a pilots FOV comprising:

means for determining where the pilot is with respect to the aircraft landing location;

display means for illustrating an accurately scaled perspective image of said aircraft landing location which is generated by a signal generator.

**28.** The instrument as described in claim 27, wherein said determining means is based solely upon receipt of externally transmitted signals.

**29.** The instrument as described in claim 28, wherein said perspective image is based upon receipt of said externally transmitted signals.

FIG. 1

FIG. 2

FIG. 3
PRIOR ART

FIG. 4

16